# EUROPEAN PATENT APPLICATION

(11) **EP 3 557 689 A1**
(43) Date of publication of application: **23.10.2019**
(21) Application number: 19164836.9
(22) Date of filing: 25.03.2019
(51) Int. Cl.: H01M 10/659, H01M 10/6555, H01M 10/617, H01M 2/10, H01M 10/643, H01M 10/647, H01M 10/6553, H01M 10/625

(54) **BATTERY PACK**

(30) Priority: 20.04.2018 JP 2018081196
(71) Applicant: YAZAKI CORPORATION, Minato-ku, Tokyo 108-8333 (JP)
(72) Inventor: YAMADA, Kenji, Susono-shi, Shizuoka 410-1194 (JP); SYOUDA, Takahiro, Susono-shi, Shizuoka 410-1194 (JP)
(74) Representative: Grünecker Patent- und Rechtsanwälte PartG mbB

(57) **Abstract**

A battery pack (1) includes: a housing (2); a plurality of battery cells (3) provided in an inner space (2sp) of the housing (2) and having substantially the same size and outer shape; a heat storage cell (4) provided in the inner space (2sp) of the housing (2), arrayed together with the plurality of battery cells (3), and placed at a position surrounded by the plurality of battery cells (3); and a heat conductive body (TC) thermally connecting the plurality of battery cells (3) and the heat storage cell (4) and having heat conductivity higher than that of an atmosphere, and the size and the outer shape of the heat storage cell (4) are substantially the same as a size and an outer shape of each of the battery cells (3).

## Description

### BACKGROUND OF THE INVENTION

### 1. Field of the Invention

The present invention relates to a battery pack.

### 2. Description of the Related Art

A vehicle such as an electric vehicle and a hybrid vehicle is equipped with a battery pack as a power supply for supplying electric power to a motor that is a drive source. In the battery pack, a plurality of battery cells is accommodated. For example, in Japanese Patent Application Laid-open No. 2018-014205, disclosed is a technology relating to a vehicular battery pack that includes a plurality of batteries, a heat conductive member thermally connected to each battery via a contact portion that comes in contact with at least an outer surface of each battery, and a heat storage member thermally connected to the heat conductive member, and in which the heat conductive member has a thermal transfer portion that comes in contact with the heat storage member with a plurality of surfaces. According to Japanese Patent Application Laid-open No. 2018-014205, it is said that, by thermally connecting each battery cell and the heat storage member via the heat conductive member, downsizing is possible without deteriorating energy density with respect to the volume of the battery pack.

Incidentally, in a battery pack, reducing a bias in temperature distribution in a plurality of battery cells accommodated in the battery pack is desired.

### SUMMARY OF THE INVENTION

An object of the present invention is to provide a battery pack capable of reducing the bias in temperature distribution in a plurality of battery cells.

In order to achieve the above mentioned object, a battery pack according to one aspect of the present invention includes a housing; a plurality of battery cells provided in an inner space of the housing and having substantially same size and outer shape; a heat storage cell provided in the inner space of the housing, arrayed together with the plurality of battery cells, and placed at a position surrounded by the plurality of battery cells; and a heat conductive body thermally connecting the plurality of battery cells and the heat storage cell and having thermal conductivity higher than that of an atmosphere, wherein a size and an outer shape of the heat storage cell are substantially same as a size and an outer shape of each of the battery cells.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a plan view illustrating a battery pack according to an embodiment;
FIG. 2 is a perspective view illustrating a battery cell and a heat storage cell in the embodiment;
FIG. 3 is a cross-sectional view illustrating the heat storage cell in the embodiment;
FIG. 4 is a cross-sectional view illustrating the battery pack in the embodiment;
FIG. 5 is a cross-sectional view illustrating the battery pack in the embodiment;
FIG. 6 is a cross-sectional view illustrating a battery pack according to a first modification of the embodiment;
FIG. 7 is a cross-sectional view illustrating a battery pack according to a second modification of the embodiment;
FIG. 8 is a plan view illustrating a battery pack according to a third modification of the embodiment;
FIG. 9 is a perspective view illustrating a battery cell and a heat storage cell according to a fourth modification of the embodiment; and
FIG. 10 is a plan view illustrating a battery pack in the fourth modification of the embodiment.

### DETAILED DESCRIPTION OF THE PREFERRED EMBODIMENT

The following describes in detail a battery pack according to an exemplary embodiment of the present invention with reference to the accompanying drawings. The invention, however, is not intended to be limited by the embodiment. The constituent elements in the following embodiment include elements easily achieved by a person skilled in the art or elements being substantially the same as the constituent elements.

### Embodiment

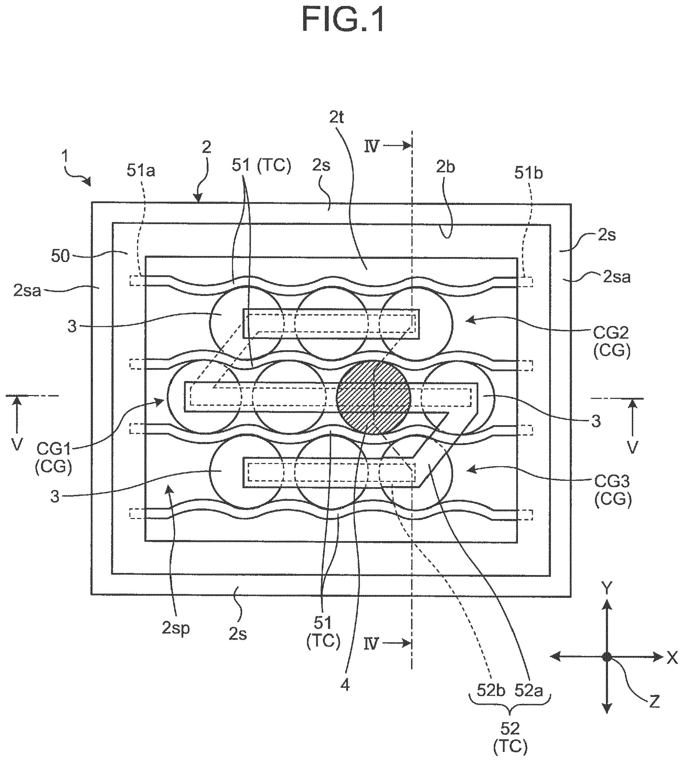

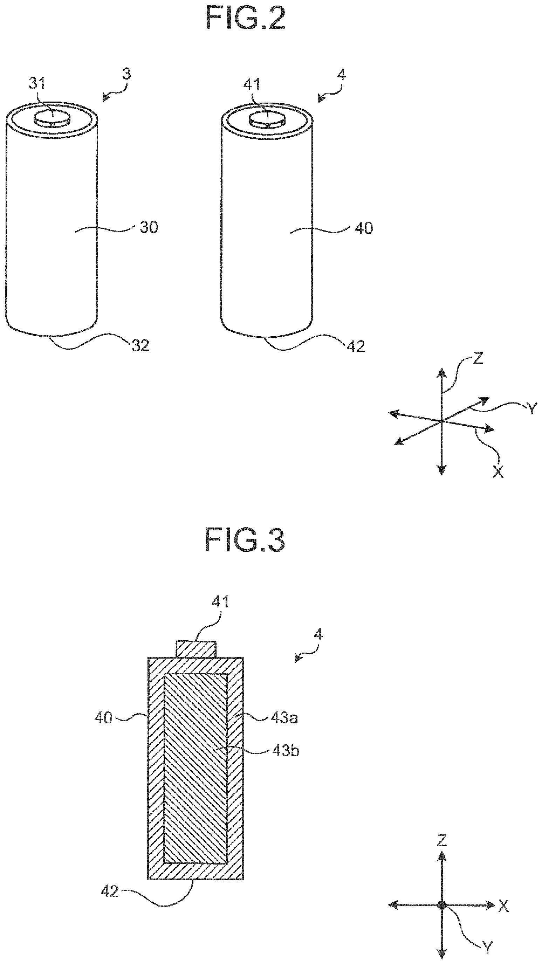

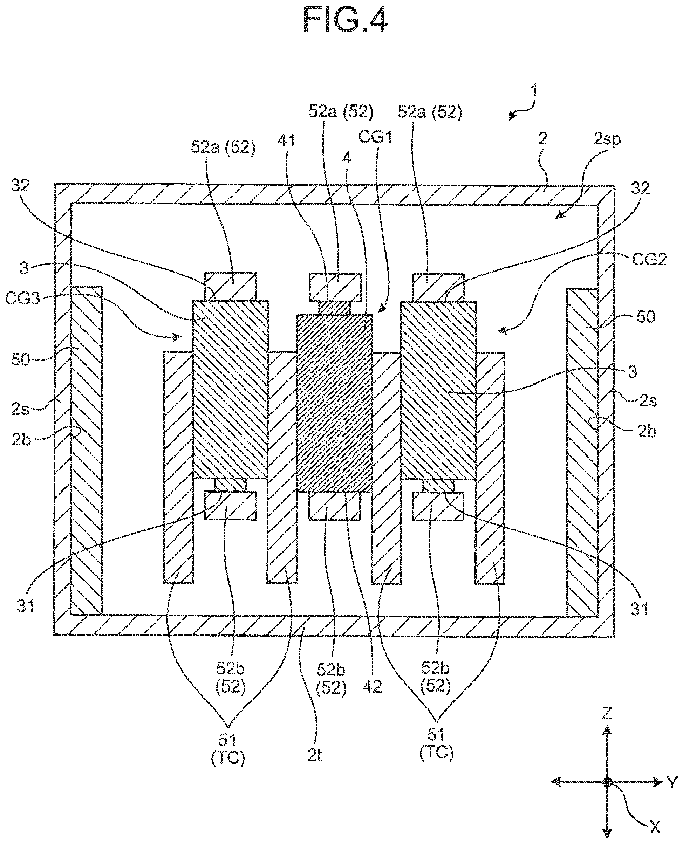

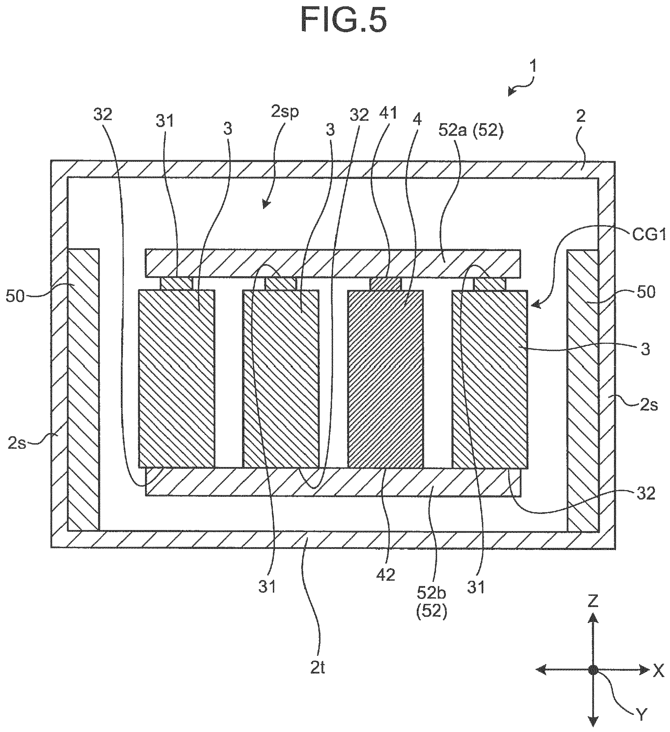

With reference to FIG. 1 to FIG. 5, the exemplary embodiment will be described. The embodiment relates to a battery pack. FIG. 1 is a plan view illustrating the battery pack according to the embodiment. FIG. 2 is a perspective view illustrating a battery cell and a heat storage cell in the embodiment. FIG. 3 is a cross-sectional view illustrating the heat storage cell in the embodiment. FIG. 4 is a cross-sectional view illustrating the battery pack in the embodiment. FIG. 5 is a cross-sectional view illustrating the battery pack in the embodiment. FIG. 4 is the cross-sectional view of the IV-IV cross-section indicated in FIG. 1. FIG. 5 is the cross-sectional view of the V-V cross-section indicated in FIG. 1.

In the following description, out of a first direction, a second direction, and a third direction orthogonal to one another, the first direction is referred to as "width direction X", the second direction is referred to as "depth direction Y", and the third direction is referred to as "height direction Z". Furthermore, typically, in a state where a battery pack 1 is installed on a vehicle, the width direction X and the depth direction Y correspond to the directions along the horizontal direction, and the height direction Z corresponds to the direction along the vertical direction. In the height direction Z, the upper side in the vertical direction is referred to as "up" and the lower side in the vertical direction is referred to as "down". The respective directions used in the following description are described as the directions in a state where the battery pack 1 is installed on a vehicle, unless otherwise specifically noted.

The battery pack 1 according to the embodiment is a vehicular battery pack installed on a vehicle (for example, an electric vehicle and a hybrid vehicle) that includes a motor as a drive source, for example. The battery pack 1 is used for supplying electric power to the motor or the like.

As illustrated in FIG. 1, the battery pack 1 in the embodiment includes a housing 2, a plurality of battery cells 3, a heat storage cell 4, and heat conductive bodies TC. The housing 2 is a box-shaped member, and has an inner space 2sp. The housing 2 has thermal conductivity. The housing 2 is formed of iron (Fe), copper (Cu), aluminum (Al), or the like, for example. In the embodiment, a bottom portion 2t of the housing 2 is in a substantially rectangular plate-like shape that is parallel to the width direction X and the depth direction Y, and is orthogonal to the height direction Z. The housing 2 includes sidewalls 2s provided standing on all sides of the bottom portion 2t along the height direction Z (see FIG. 1 and FIG. 4). That is, the shape of the housing 2 in the embodiment is substantially rectangular parallelepiped.

The plurality of battery cells 3 and the heat storage cell 4 are accommodated in the inner space 2sp of the housing 2. The inner space 2sp is a space surrounded by the bottom portion 2t and the sidewalls 2s. The plurality of battery cells 3 and the heat storage cell 4 are arrayed in the inner space 2sp of the housing 2. For example, the plurality of battery cells 3 and the heat storage cell 4 are arrayed in a zigzag pattern or in a matrix form. The battery pack 1 of the embodiment has three cell array groups CG in which the battery cells 3 are lined up in the width direction X. One out of the three cell array groups CG includes the heat storage cell 4 lined up along the width direction X together with the battery cells 3. The three cell array groups CG are lined up along the depth direction Y. In the embodiment, the plurality of battery cells 3 and the heat storage cell 4 are arrayed in three rows in a zigzag pattern along the width direction X. The heat storage cell 4 is, as viewed from the height direction Z, placed at a position surrounded by the plurality of battery cells 3.

Out of the three cell array groups CG lined up along the depth direction Y, the cell array group CG positioned at the center in the depth direction Y is referred to as a first cell array group CG1. One of the cell array groups CG adjacent to the first cell array group CG1 in the depth direction Y is referred to as a second cell array group CG2, and the other of the cell array groups CG adjacent to the first cell array group CG1 in the depth direction Y is referred to as a third cell array group CG3.

In the embodiment, the first cell array group CG1 is made up of three battery cells 3 and one heat storage cell 4 lined up along the width direction X. The heat storage cell 4 is placed at a position sandwiched by the battery cells 3 in the width direction X. The second cell array group CG2 is made up of three battery cells 3. The battery cells 3 in the second cell array group CG2 and the battery cells 3 and the heat storage cell 4 in the first cell array group CG1 are placed alternately in the width direction X. The third cell array group CG3 is made up of three battery cells 3. The battery cells 3 in the third cell array group CG3 and the battery cells 3 and the heat storage cell 4 in the first cell array group CG1 are placed alternately in the width direction X.

The plurality of battery cells 3 is each a rechargeable secondary battery, and the size and the outer shape thereof are identical, for example. The battery cell 3 is a lithium-ion battery, for example. As illustrated in FIG. 2, the battery cell 3 of the embodiment includes a main unit portion 30, a positive terminal 31, and a negative terminal 32. The main unit portion 30 has a cylindrical outer shape extending in an axial direction. Out of both ends in the axial direction of the main unit portion 30, the positive terminal 31 is formed on one end, and the negative terminal 32 is formed on the other end. The positive terminal 31 is a portion in a disc shape for which the direction orthogonal to the axial direction is the radial direction. The diameter of the positive terminal 31 is smaller than the diameter of the main unit portion 30. The negative terminal 32 is a flat portion formed on the other end of the main unit portion 30.

The size and the outer shape of the heat storage cell 4 are substantially the same as the size and the outer shape of the battery cell 3, and are identical, for example. The heat storage cell 4 of the embodiment includes a main unit portion 40, a pseudo-positive terminal 41, and a pseudo-negative terminal 42. The size and the outer shape of the main unit portion 40 of the heat storage cell 4 are substantially the same as the size and the outer shape of the main unit portion 30 of the battery cell 3. That is, the heat storage cell 4 has a cylindrical shape. The pseudo-positive terminal 41 is a portion modeled on the positive terminal 31. The size and the outer shape of the pseudo-positive terminal 41 are substantially the same as the size and the outer shape of the positive terminal 31. The pseudo-negative terminal 42 is a portion modeled on the negative terminal 32. The size and the outer shape of the pseudo-negative terminal 42 are substantially the same as those of the negative terminal 32.

Note that the size and the outer shape of the plurality of battery cells 3 only need to be substantially the same, and that the size and the outer shape of the heat storage cell 4 only need to be substantially the same as the size and the outer shape of the battery cell 3.

In the present description, that "the size is substantially the same" does not necessarily need to be in an identical size strictly. For example, variations in size in a degree that arises in a manufacturing process are allowed. In the present description, that "the outer shape is substantially the same" does not necessarily need to be in an identical shape strictly. For example, differences in surface texture and unevenness of a surface due to differences in material and variations in shape in a degree that arises in a manufacturing process are allowed.

In the present description, that "the size and the outer shape are substantially the same" includes the case where the cross-sectional area and the cross-sectional shape of a cross-section orthogonal to the height direction Z in the main unit portion (the main unit portions 30, 40) are substantially equal, even when the shapes of the upper surface and the lower surface of the cell (the battery cell 3, the heat storage cell 4) are different. That "the cross-sectional area and the cross-sectional shape are substantially equal" does not necessarily need to be in an identical cross-sectional area and an identical cross-sectional shape strictly. For example, variations in cross-sectional area and in cross-sectional shape in a degree that arises in a manufacturing process are allowed. For example, in the heat storage cell 4, even in a case where it is made up of only the cylindrical main unit portion 40 without forming the pseudo-positive terminal 41 and the pseudo-negative terminal 42, the battery cell 3 and the heat storage cell 4 are substantially the same in size and in outer shape.

The heat storage cell 4 has a thermal capacity higher than that of the battery cell 3. The heat storage cell 4 is made up of a heat storage material that stores heat by sensible heat or latent heat. In the embodiment, the heat storage cell 4 is made up including a metal case 43a and a heat storage medium 43b. The metal case 43a is formed of a metal material such as aluminum, for example. As the heat storage medium 43b, oil, metal such as iron and aluminum, ceramic, cement, brick, paraffin, fatty acids, sugar alcohol, inorganic salt hydrate, vanadium dioxide, water, and others can be used. The oil, metal such as iron and aluminum, ceramic, cement, and brick store heat by sensible heat. The paraffin, fatty acids, sugar alcohol, inorganic salt hydrate, and vanadium dioxide store heat by latent heat. The water stores heat by sensible heat and latent heat.

The heat storage cell 4 may include no metal case 43a. A whole of the heat storage cell 4 may be formed of a heat storage material, for example. In this case, as the heat storage material to form the heat storage cell 4, a heat storage material that stores sensible heat as a solid is used as is. For example, as the heat storage material to form the heat storage cell 4, metal such as iron and aluminum, ceramic, cement, brick, and others can be used.

The heat conductive body TC has thermal conductivity higher than that of the atmosphere. As illustrated in FIG. 1, in the battery pack 1 in the embodiment, as the heat conductive bodies TC, heat conductive sheets 51 and a bus bar 52 are provided.

The heat conductive sheet 51 is a sheet-like member including the heat conductive material. The heat conductive sheets 51 are placed sandwiching the respective cell array groups CG in the depth direction Y. The heat conductive sheets 51 thermally connect the plurality of battery cells 3 and the heat storage cell 4 that are arrayed in the inner space 2sp of the housing 2, and enable transferring of heat between the battery cells 3 and the heat storage cell 4. Between the adjacent cell array groups CG, one heat conductive sheet 51 is placed being sandwiched by the two adjacent cell array groups CG. At this time, as viewed from the height direction Z, each heat conductive sheet 51 is formed in a wavy shape along the curved surface shape of the outer circumferential surfaces of the respective battery cells 3 arrayed along the width direction X.

In the embodiment, the heat conductive sheets 51 are placed at an interspace between the first cell array group CG1 and the second cell array group CG2, at an interspace between the first cell array group CG1 and the third cell array group CG3, and at positions sandwiching the three cell array groups CG. The heat conductive sheet 51 placed at the interspace between the first cell array group CG1 and the second cell array group CG2 is formed in a wavy shape so as to come in contact with the outer circumferential surfaces of the respective battery cells 3 included in the first cell array group CG1, with the outer circumferential surface of the heat storage cell 4 included in the first cell array group CG1, and with the outer circumferential surfaces of the respective battery cells 3 included in the second cell array group CG2. The heat conductive sheet 51 placed at the interspace between the first cell array group CG1 and the third cell array group CG3 is formed in a wavy shape so as to come in contact with the outer circumferential surfaces of the respective battery cells 3 included in the first cell array group CG1, with the outer circumferential surface of the heat storage cell 4 included in the first cell array group CG1, and with the outer circumferential surfaces of the respective battery cells 3 included in the third cell array group CG3. One of the heat conductive sheets 51 placed at the positions sandwiching the three cell array groups CG is formed in a wavy shape so as to come in contact with the outer circumferential surfaces of the respective battery cells 3 included in the second cell array group CG2. The other of the heat conductive sheets 51 placed at the positions sandwiching the three cell array groups CG is formed in a wavy shape so as to come in contact with the outer circumferential surfaces of the respective battery cells 3 included in the third cell array group CG3.

The heat conductive sheet 51 only needs to be provided at an interspace between the heat storage cell 4 and at least one of the plurality of battery cells 3, and to be in contact with the heat storage cell 4 and the at least one of the plurality of battery cells 3. As the heat conductive material of the heat conductive sheet 51, graphite, resin containing heat conductive filler, and metal such as copper and aluminum can be used. The heat conductive sheet 51 of the embodiment is made up of sheet-like graphite.

As illustrated in FIG. 4, on inner wall surfaces 2b of the sidewalls 2s in the housing 2, plate-like heat storage members 50 are provided. The heat storage members 50 are placed along the inner wall surfaces 2b so as to surround the inner space 2sp of the housing 2. The heat storage member 50 is formed of a heat storage material. For example, as the heat storage material to form the heat storage member 50, metal such as iron and aluminum, ceramic, cement, brick, and others can be used.

As illustrated in FIG. 1, the sidewalls 2s of the housing 2 have a pair of sidewall portions 2sa opposite to each other across the plurality of battery cells 3 and the heat storage cell 4. The pair of sidewall portions 2sa is thermally connected to the respective heat conductive sheets 51. A state in which the heat conductive sheets 51 and the pair of sidewall portions 2sa are thermally connected includes not only the case where the heat conductive sheet 51 and the sidewall portion 2sa are directly in contact but also the case where the transferring of heat between the heat conductive sheet 51 and the sidewall portion 2sa is possible indirectly via a member having heat conductivity. In the embodiment, the heat conductive sheets 51 and the pair of sidewall portions 2sa are thermally connected via the heat storage members 50. Both end portions 51a and 51b of the heat conductive sheet 51 in the width direction X are embedded in the heat storage members 50. The plurality of battery cells 3 and the heat storage cell 4 are thermally connected to the housing 2 via the heat conductive sheets 51 and the heat storage members 50.

As illustrated in FIG. 5, in the embodiment, the battery cells 3 and the heat storage cell 4 included in the first cell array group CG1 are arrayed such that the positive terminals 31 and the pseudo-positive terminal 41 face upward, and such that the negative terminals 32 and the pseudo-negative terminal 42 face downward. As illustrated in FIG. 4, the battery cells 3 included in the second cell array group CG2 are arrayed such that the negative terminals 32 face upward and the positive terminals 31 face downward. The battery cells 3 included in the third cell array group CG3 are arrayed such that the negative terminals 32 face upward and the positive terminals 31 face downward.

The bus bar 52 electrically connects the plurality of battery cells 3. As illustrated in FIG. 4 and FIG. 5, the bus bar 52 of the embodiment includes a first bus bar 52a that is placed on the respective battery cells 3 and the heat storage cell 4, and a second bus bar 52b that is placed below the respective battery cells 3 and the heat storage cell 4. That is, the plurality of battery cells 3 and the heat storage cell 4 are, in the height direction Z, sandwiched by the two bus bars (the first bus bar 52a, the second bus bar 52b).

As illustrated in FIG. 1, in the embodiment, the first bus bar 52a and the second bus bar 52b are each made up of a pair of two bus bars. One of the pair of two bus bars constituting the first bus bar 52a is electrically and thermally connected to the positive terminal 31 of each battery cell 3 in the first cell array group CG1, and the negative terminal 32 of each battery cell 3 in the third cell array group CG3. The one of the pair of two bus bars constituting the first bus bar 52a is also thermally connected to the pseudo-positive terminal 41 of the heat storage cell 4. The other of the pair of two bus bars constituting the first bus bar 52a is electrically and thermally connected to the negative terminal 32 of each battery cell 3 in the second cell array group CG2.

One of the pair of two bus bars constituting the second bus bar 52b is electrically and thermally connected to the negative terminal 32 of each battery cell 3 in the first cell array group CG1, and the positive terminal 31 of each battery cell 3 in the second cell array group CG2. The one of the pair of two bus bars constituting the second bus bar 52b is also thermally connected to the pseudo-negative terminal 42 of the heat storage cell 4. The other of the pair of two bus bars constituting the second bus bar 52b is electrically and thermally connected to the positive terminal 31 of each battery cell 3 in the third cell array group CG3.

As illustrated in FIG. 4, in the embodiment, the bus bar 52 is connected to the positive terminal 31 and the negative terminal 32 of each battery cell 3 and to the pseudo-positive terminal 41 and the pseudo-negative terminal 42 of the heat storage cell 4. The bus bar 52 electrically connects the respective battery cells 3 included in one cell array group CG in parallel, and electrically connects the respective cell array groups CG in series. By this connection, the heat storage cell 4 can transfer heat with the respective battery cells 3 via the bus bar 52 (the first bus bar 52a and the second bus bar 52b). The bus bar 52 of the embodiment is a plate-like metal member. The bus bar 52 is formed of copper, copper alloy, aluminum, aluminum alloy, gold, and stainless steel, for example.

The bus bar 52 only needs to electrically connect the plurality of battery cells 3 in at least one of series connection and parallel connection, and the embodiment is not limited to the above-described connection form. Furthermore, in the case where the battery pack 1 is provided with the heat conductive body TC other than the bus bar 52, the bus bar 52 may be not thermally connected to the heat storage cell 4.

As in the foregoing, the battery pack 1 in the embodiment includes: the housing 2; the plurality of battery cells 3 provided in the inner space 2sp of the housing 2 and having substantially the same size and outer shape; the heat storage cell 4 provided in the inner space 2sp of the housing 2, arrayed together with the plurality of battery cells 3, and placed at a position surrounded by the plurality of battery cells 3; and the heat conductive bodies TC thermally connecting the plurality of battery cells 3 and the heat storage cell 4 and having heat conductivity higher than that of the atmosphere, and the size and the outer shape of the heat storage cell 4 are substantially the same as the size and the outer shape of the battery cell 3.

In the battery pack 1 in the embodiment, the heat storage cell 4 is placed at a position surrounded by the plurality of battery cells 3, and the plurality of battery cells 3 and the heat storage cell 4 are thermally connected by the heat conductive bodies TC. With this configuration, it is possible to store in the heat storage cell 4 the heat that is generated from the plurality of battery cells 3 arrayed in the inner space 2sp. Furthermore, because the size and the outer shape of the heat storage cell 4 are substantially the same as the size and the outer shape of the battery cell 3, it is possible to array the heat storage cell 4 together with the battery cells 3. Accordingly, as compared with the case where a member having a heat storage property and having the size and the outer shape different from those of the battery cell 3 is provided, the assembling workability is improved.

In a battery pack in which no heat storage cell 4 is provided, the heat is likely to accumulate in a central area of the plurality of battery cells arrayed in the inner space of the housing in particular, and the temperature tends to become higher compared with the surrounding areas. In the battery pack 1 in the embodiment, by placing the heat storage cell 4 at a position surrounded by the plurality of battery cells 3, and by storing the heat generated in the battery cells 3 in the heat storage cell 4, it is possible to reduce the bias in temperature distribution in the plurality of battery cells 3.

Furthermore, in the battery pack 1 in the embodiment, the thermal capacity of the heat storage cell 4 is greater than the thermal capacity of the battery cell 3. Because the heat storage cell 4 can store more heat than the battery cell 3 can, it is possible to effectively reduce the bias in temperature distribution in the plurality of battery cells 3.

In the battery pack 1 in the embodiment, the heat storage cell 4 includes the metal case 43a having the size and the outer shape substantially the same as those of the battery cell 3, and the heat storage medium 43b that is provided inside the metal case 43a. With this configuration, because the heat storage material itself is not needed to be modeled on the outer shape of the battery cell 3, the manufacturing of the heat storage cell 4 is facilitated. Furthermore, the heat storage material in a liquid form can also be used as the heat storage medium 43b.

In the battery pack 1 in the embodiment, the heat conductive bodies TC include the bus bar 52, the battery cells 3 are electrically connected to one another by the bus bar 52, and the bus bar 52 thermally connects the plurality of battery cells 3 and the heat storage cell 4. In the embodiment, the bus bar 52 is used not only as a member that electrically connects each battery cell 3 but also as a member that enables the transferring of heat between the respective battery cells 3 and the heat storage cell 4. For example, it is possible to omit a dedicated component that enables the transferring of heat between the heat storage cell 4 and the battery cells 3. Consequently, reducing the number of components is possible, and downsizing the battery pack 1 is possible.

In the battery pack 1 in the embodiment, the heat conductive bodies TC include the heat conductive sheets 51, and the heat conductive sheet 51 is provided at an interspace between the heat storage cell 4 and at least one of the plurality of battery cells 3 and is in contact with the heat storage cell 4 and the at least one of the plurality of battery cells 3. In the embodiment, as compared with the case where the interspace between the heat storage cell 4 and at least one of the plurality of battery cells 3 is the atmosphere, it is possible to efficiently transmit the heat to the heat storage cell 4 from the battery cell 3.

In the battery pack 1 in the embodiment, the housing 2 has a pair of sidewall portions 2sa opposite to each other across the plurality of battery cells 3 and the heat storage cell 4, and the pair of sidewall portions 2sa are thermally connected to the respective heat conductive sheets 51. In a case where the heat is exchanged between the battery cells 3 and the sidewall portions 2sa along the direction from one of the pair of sidewall portions 2sa toward the other, because the heat in the central area of the battery cells 3 arrayed in the inner space 2sp is difficult to escape, the temperature in the central area may become higher than that of the surrounding area. Even in such a configuration, because the heat storage cell 4 is placed at a position surrounded by the plurality of battery cells 3, it is possible to effectively reduce the bias in temperature distribution in the plurality of battery cells 3.

### First Modification of Embodiment

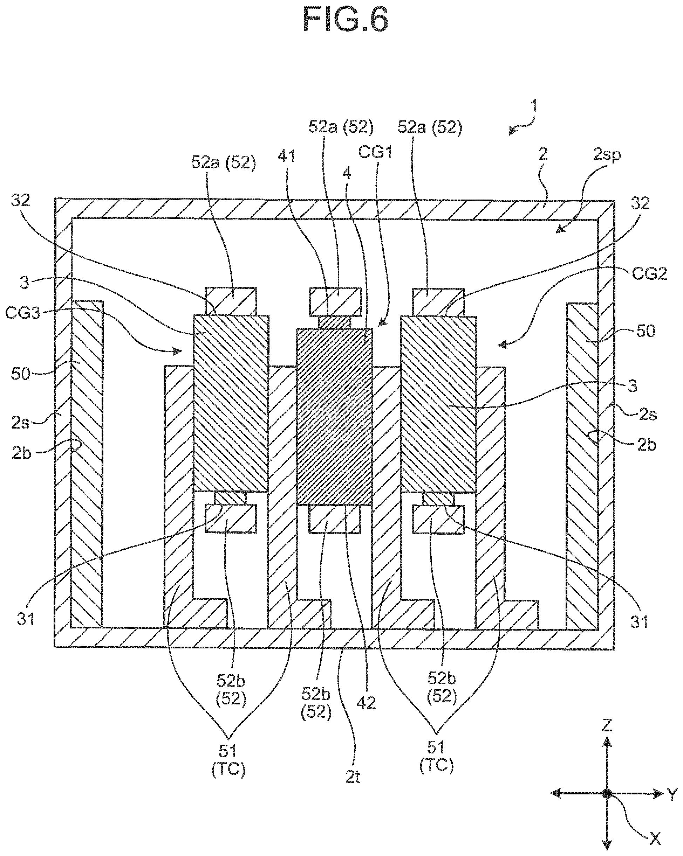

Next, with reference to FIG. 6, a battery pack 1 according to a first modification of the embodiment will be described. FIG. 6 is a cross-sectional view illustrating the battery pack in the first modification of the embodiment. FIG. 6 is a diagram corresponding to FIG. 4 in the above-described embodiment.

In the battery pack 1 in the first modification, the point that is different from the battery pack 1 in the above-described embodiment is that the heat conductive sheets 51 and the bottom portion 2t of the housing 2 are in contact. The other configurations are the same as those of the above-described embodiment.

As illustrated in FIG. 6, the heat conductive sheets 51 in the first modification extend lower than the battery cells 3 and the heat storage cell 4 and are in contact with the bottom portion 2t of the housing 2. The lower end portion of the heat conductive sheet 51 is bent along the bottom portion 2t of the housing 2. As the heat conductive sheet 51 is bent along the bottom portion 2t of the housing 2, the principal surface on one side of the heat conductive sheet 51 is made to come in contact with the bottom portion 2t of the housing 2. With this configuration, a wider contact area than that by making the end portion of the heat conductive sheet 51 come in contact is ensured.

In the first modification, it is configured to release the heat generated in the battery cells 3 to the bottom portion 2t of the housing 2 via the heat conductive sheets 51. With this configuration, as compared with a configuration that releases the heat from the battery cells 3 to the sidewall portions 2sa via the heat conductive sheets 51, it is possible to efficiently release the heat in the central area of the plurality of battery cells.

### Second Modification of Embodiment

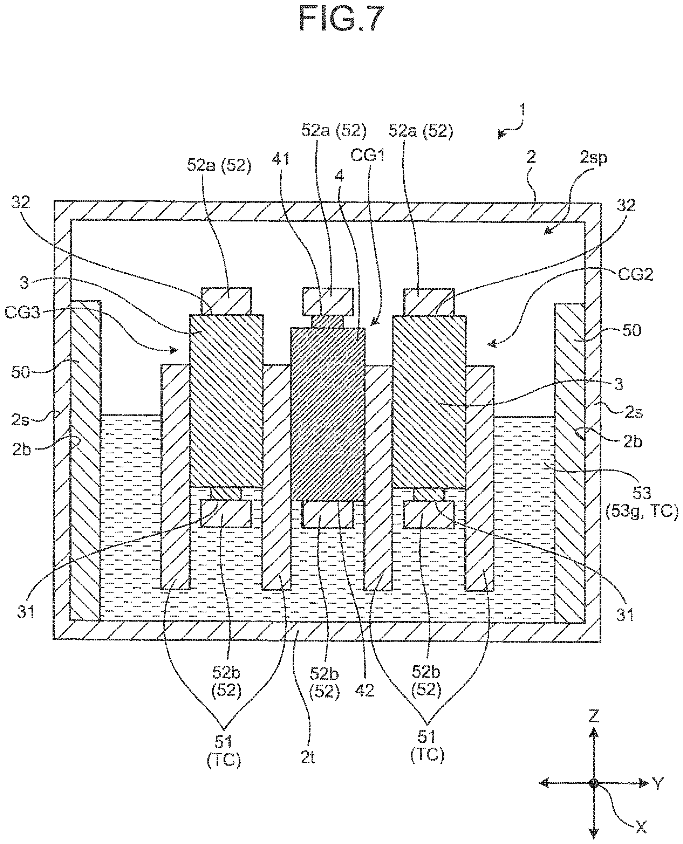

Next, with reference to FIG. 7, a battery pack 1 according to a second modification of the embodiment will be described. FIG. 7 is a cross-sectional view illustrating the battery pack in the second modification of the embodiment. FIG. 7 is a diagram corresponding to FIG. 4 in the above-described embodiment.

In the battery pack 1 in the second modification, the point that is different from the battery pack 1 in the above-described embodiment is that a liquid 53 is stored in the inner space 2sp of the housing 2. The other configurations are the same as those of the above-described embodiment.

As illustrated in FIG. 7, the battery pack 1 in the second modification includes the liquid 53 as the heat conductive body TC. The liquid 53 is stored in the inner space 2sp of the housing 2. The battery cells 3 and the heat storage cell 4 are immersed in the liquid 53. The battery cells 3 and the heat storage cell 4 in the second modification are immersed into the liquid 53 up to the vicinities of the central portions in the height direction Z. As the liquid 53, an insulative liquid such as silicon oil, paraffin, and fluorine based inert liquid can be used, for example. The battery cells 3 and the heat storage cell 4 are also thermally connected via the liquid 53. Furthermore, a part of the heat conductive sheets 51 also is immersed in the liquid 53. The heat conductive sheets 51 in the second modification extend slightly lower than the battery cells 3 and the heat storage cell 4 but are spaced apart from the bottom portion 2t of the housing 2.

As the heat conductive body TC, a gelatinous material 53g in place of the liquid 53 may be provided. In this case, the gelatinous material 53g is provided so as to be in contact with at least a part of the battery cells 3 and at least a part of the heat storage cell 4.

In the battery pack 1 in the second modification, the heat conductive body TC includes the liquid 53 stored in the inner space 2sp of the housing 2, and at least a part of the plurality of battery cells 3 and at least a part of the heat storage cell 4 are immersed into the liquid 53. Because the heat can be transmitted from the battery cells 3 to the heat storage cell 4 via the liquid 53, as compared with the case where the heat is transmitted from the battery cells 3 to the heat storage cell 4 via the atmosphere, efficient transfer of the heat is possible.

In the battery pack 1 in the second modification, the heat conductive body TC may be the gelatinous material 53g that is in contact with at least a part of the plurality of battery cells 3 and at least a part of the heat storage cell 4. Because the heat can be transmitted from the battery cells 3 to the heat storage cell 4 via the gelatinous material 53g, as compared with the case where the heat is transmitted from the battery cells 3 to the heat storage cell 4 via the atmosphere, efficient transfer of the heat is possible.

### Third Modification of Embodiment

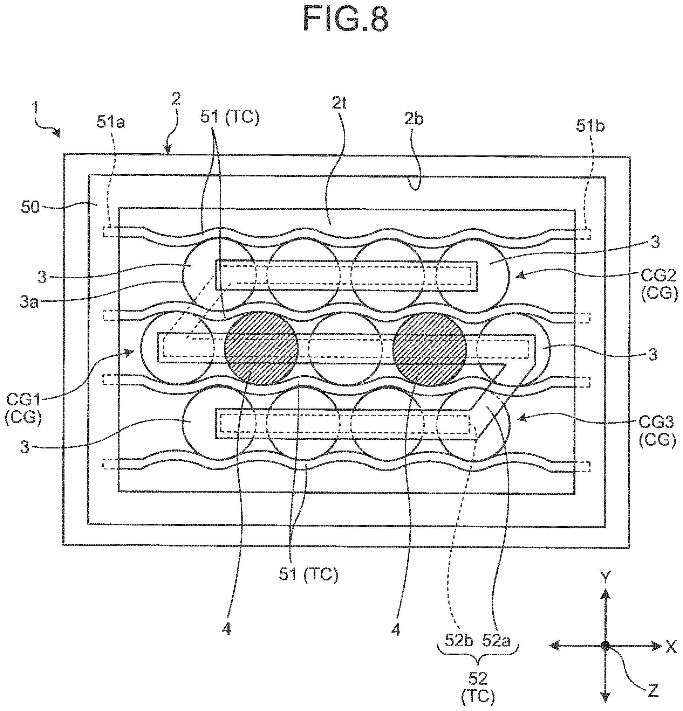

Next, with reference to FIG. 8, a battery pack 1 according to a third modification of the embodiment will be described. FIG. 8 is a plan view illustrating the battery pack in the third modification of the embodiment.

In the battery pack 1 in the third modification, the point that is different from the battery pack 1 in the above-described embodiment is that the first cell array group CG1 is made up of three battery cells 3 and two heat storage cells 4 lined up along the width direction X. Furthermore, the point that is also different from that of the above-described embodiment is that the second cell array group CG2 and the third cell array group CG3 are each made up of four battery cells 3.

As illustrated in FIG. 8, the battery cells 3 and the heat storage cells 4 in the first cell array group CG1 are placed alternately in the width direction X. At this time, the heat storage cells 4 are each placed at a position sandwiched by the battery cells 3 in the width direction X.

The plurality of battery cells 3 and the heat storage cells 4 included in the cell array groups CG are placed in a zigzag pattern as with the above-described embodiment. That is, the battery cells 3 in the second cell array group CG2, and the battery cells 3 and the heat storage cells 4 in the first cell array group CG1 are placed alternately in the width direction X. The battery cells 3 in the third cell array group CG3, and the battery cells 3 and the heat storage cells 4 in the first cell array group CG1 are placed alternately in the width direction X.

As in the third modification, in a case in which there are a plurality of places where the heat storage cell 4 can be placed surrounded by a plurality of battery cells 3, the heat storage cell 4 may be placed for each such place. The number of the heat storage cells 4 is determined in consideration of the energy density of charging power in the battery pack 1, the heat that is generated in the battery cells 3, or the like.

### Fourth Modification of Embodiment

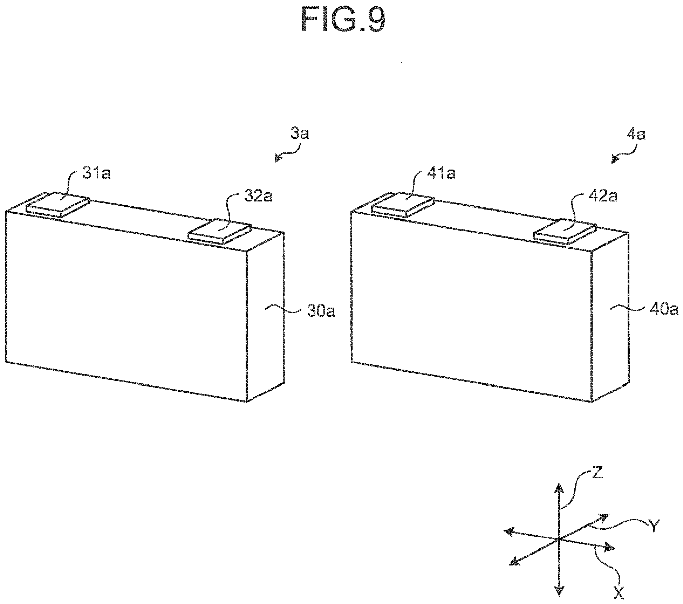

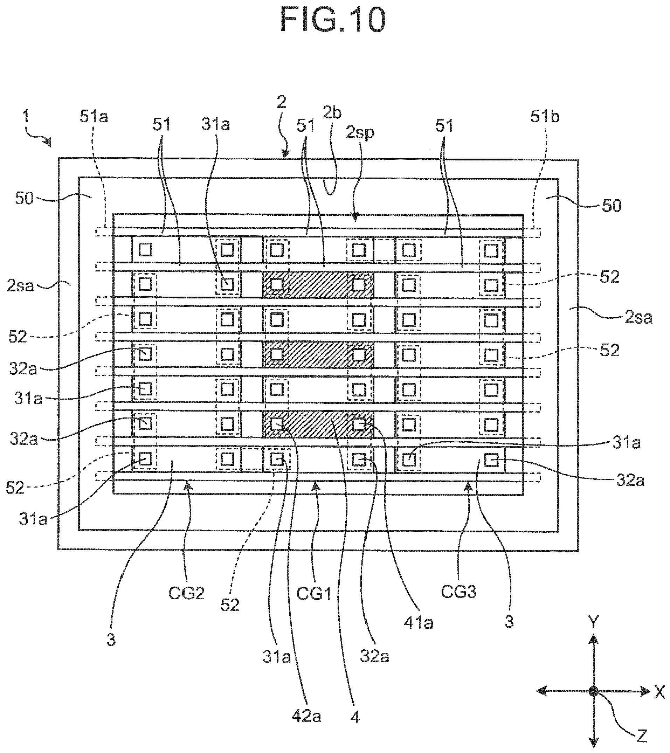

Next, with reference to FIG. 9 and FIG. 10, a battery pack 1 according to a fourth modification of the embodiment will be described.. FIG. 9 is a perspective view illustrating a battery cell and a heat storage cell in the fourth modification of the embodiment. FIG. 10 is a plan view illustrating the battery pack in the fourth modification of the embodiment.

In the battery pack 1 in the fourth modification, the point that is different from the battery pack 1 in the above-described embodiment is that a battery cell 3a is a rectangular battery cell. Furthermore, the point that is also different from that of the above-described embodiment is that the size and the outer shape of a heat storage cell 4a are substantially the same as those of the rectangular battery cell 3a.

As illustrated in FIG. 9, the battery cell 3a includes a main unit portion 30a, a positive terminal 31a, and a negative terminal 32a. The main unit portion 30a has a flat substantially rectangular parallelepiped shape. The positive terminal 31a and the negative terminal 32a are arranged on one of six outer wall surfaces of the main unit portion 30a. In the fourth modification, the positive terminal 31a and the negative terminal 32a are arranged in line in one direction (the width direction X) at the upper surface of the main unit portion 30a. The positive terminal 31a and the negative terminal 32a are each a rectangular plate-like terminal provided on the outer wall surface of the main unit portion 30a.

The heat storage cell 4a includes a main unit portion 40a, a pseudo-positive terminal 41a, and a pseudo-negative terminal 42a. In the heat storage cell 4a, the pseudo-positive terminal 41a and the pseudo-negative terminal 42a are electrically conductive. The size and the outer shape of the main unit portion 40a are substantially the same as the size and the outer shape of the main unit portion 30a. The pseudo-positive terminal 41a is modeled on the positive terminal 31a, and the pseudo-negative terminal 42a is modeled on the negative terminal 32a. That is, the size and the outer shape of the heat storage cell 4a are substantially the same as the size and the outer shape of the battery cell 3a.

As illustrated in FIG. 10, in the battery pack 1 in the fourth embodiment, a plurality of battery cells 3a and a plurality of heat storage cells 4a are arrayed in a matrix form. In the plurality of battery cells 3a, the size and the outer shape of each battery cell 3a are substantially the same. Furthermore, in the plurality of heat storage cells 4a, the size and the outer shape of each heat storage cell 4a are substantially the same. The battery pack 1 in the fourth modification has three cell array groups CG in which the battery cells 3a are lined up along the depth direction Y. The three cell array groups CG are lined up along the width direction X. The heat storage cell 4a is, as viewed from the height direction Z, placed at a position surrounded by the plurality of battery cells 3a.

The battery cell 3a is arrayed such that the positive terminal 31a and the negative terminal 32a are lined up along the width direction X. Furthermore, the heat storage cell 4a is also arrayed in the same manner such that the pseudo-positive terminal 41a and the pseudo-negative terminal 42a are lined up along the width direction X.

In each cell array group CG, the positive terminal 31a (or the pseudo-positive terminal 41a) and the negative terminal 32a (or the pseudo-negative terminal 42a) are placed alternately along the depth direction Y. That is, in one cell array group CG, two terminal groups in which the terminal (the positive terminal 31a and the negative terminal 32a) of the battery cell 3a and the terminal (the pseudo-positive terminal 41a and the pseudo-negative terminal 42a) of the heat storage cell 4a are lined up along the depth direction Y are placed. In one terminal group, the positive terminal 31a (or the pseudo-positive terminal 41a) and the negative terminal 32a (the pseudo-negative terminal 42a) are placed alternately along the depth direction Y.

In the fourth modification, out of the three cell array groups CG lined up along the width direction X, the cell array group CG positioned at the center in the width direction X is referred to as the first cell array group CG1. One of the cell array groups CG adjacent to the first cell array group CG1 in the width direction X is referred to as the second cell array group CG2, and the other of the cell array groups CG adjacent to the first cell array group CG1 in the width direction X is referred to as the third cell array group CG3.

The first cell array group CG1 is made up of four battery cells 3a and three heat storage cells 4a lined up along the depth direction Y. The heat storage cells 4a are each placed at a position sandwiched by the battery cells 3a in the depth direction Y. That is, in the first cell array group CG1, the plurality of battery cells 3a and heat storage cells 4a are placed alternately in the depth direction Y.

The battery cells 3a of each cell array group CG are electrically connected in series via a plurality of bus bars 52. At this time, the pseudo-positive terminal 41a of the heat storage cell 4a is connected, via the bus bar 52, to the negative terminal 32a of the battery cell 3a adjacent in the depth direction Y, and the pseudo-negative terminal 42a of the heat storage cell 4a is connected, via another bus bar 52, to the positive terminal 31a of another battery cell 3a adjacent in the depth direction Y. The respective battery cells 3a and the respective heat storage cells 4a are electrically and thermally connected via the bus bars 52.

The heat conductive sheets 51 are placed sandwiching the respective battery cells 3a and the respective heat storage cells 4a in the depth direction Y. The heat conductive sheets 51 thermally connect the battery cells 3a and the heat storage cells 4a that are arrayed in the inner space 2sp of the housing 2, and enable the transferring of heat between the battery cells 3a and the heat storage cells 4a. The heat conductive sheet 51 is provided at an interspace between the heat storage cell 4a and at least one of the plurality of battery cells 3a, and is in contact with the heat storage cell 4a and the at least one of the plurality of battery cells 3a.

In the fourth modification, a pair of sidewall portions 2sa of the housing 2 is thermally connected to the respective heat conductive sheets 51. A state in which the heat conductive sheets 51 and the pair of sidewall portions 2sa are thermally connected includes not only the case where the heat conductive sheets 51 and the sidewall portion 2sa are directly in contact but also the case where the transferring of heat between the heat conductive sheets 51 and the sidewall portion 2sa is possible indirectly via a member having heat conductivity. In the fourth modification, the heat conductive sheets 51 and the pair of sidewall portions 2sa are thermally connected via the heat storage members 50 provided on the inner wall surfaces 2b of the housing 2. In the width direction X, both end portions 51a and 51b of the heat conductive sheets 51 are embedded in the heat storage members 50. The plurality of battery cells 3a and the heat storage cells 4a are thermally connected to the housing 2 via the heat conductive sheets 51 and the heat storage members 50.

In the battery pack 1 in which the rectangular battery cells 3a are arrayed as in the fourth modification, by placing the heat storage cells 4a at positions surrounded by the plurality of battery cells 3a, it is possible to reduce the bias in temperature distribution in the plurality of battery cells 3a.

The disclosed content in the above-described embodiment and the respective modifications can be implemented in combination as appropriate.

The battery pack according to the present embodiments includes a heat storage cell arrayed together with a plurality of battery cells and placed at a position surrounded by the plurality of battery cells, and a heat conductive body thermally connecting the plurality of battery cells and the heat storage cell and having thermal conductivity higher than that of the atmosphere. With the battery pack according to the present invention, the invention has an effect in that the bias in temperature distribution in the plurality of battery cells can be reduced.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A battery pack (1) comprising:
a housing (2);
a plurality of battery cells (3) provided in an inner space (2sp) of the housing (2) and having substantially same size and outer shape;
a heat storage cell (4) provided in the inner space (2sp) of the housing (2), arrayed together with the plurality of battery cells (3), and placed at a position surrounded by the plurality of battery cells (3); and
a heat conductive body (TC) thermally connecting the plurality of battery cells (3) and the heat storage cell (4) and having thermal conductivity higher than that of an atmosphere, wherein
a size and an outer shape of the heat storage cell (4) are substantially same as a size and an outer shape of each of the battery cells (3).

2. The battery pack (1) according to claim 1, wherein
a thermal capacity of the heat storage cell (4) is greater than a thermal capacity of the battery cell (3).

3. The battery pack (1) according to claim 1 or 2, wherein
the heat storage cell (4) includes a metal case (43a) having a size and an outer shape substantially same as the size and the outer shape of the battery cell (3), and a heat storage medium (43b) that is provided inside the metal case (43a).

4. The battery pack (1) according to any one of claims 1 to 3, wherein
the heat conductive body (TC) includes a bus bar (52),
the battery cells (3) are electrically connected to one another by the bus bar (52), and
the bus bar (52) thermally connects the plurality of battery cells (3) and the heat storage cell (4).

5. The battery pack (1) according to any one of claims 1 to 4, wherein
the heat conductive body (TC) includes a heat conductive sheet (51), and
the heat conductive sheet (51) is provided at an interspace between the heat storage cell (4) and at least one of the plurality of battery cells (3), and is in contact with the heat storage cell (4) and the at least one of the plurality of battery cells (3).

6. The battery pack (1) according to claim 5, wherein
the housing (2) has a pair of sidewall portions (2sa) opposite to each other across the plurality of battery cells (3) and the heat storage cell (4), and
the pair of sidewall portions (2sa) are each thermally connected to the heat conductive sheet (51).

7. The battery pack (1) according to any one of claims 1 to 6, wherein
the heat conductive body (TC) includes a liquid (53) stored in the inner space (2sp) of the housing (2), and
at least a part of the plurality of battery cells (3) and at least a part of the heat storage cell (4) are immersed into the liquid (53).

8. The battery pack (1) according to any one of claims 1 to 6, wherein
the heat conductive body (TC) includes a gelatinous material (53g) that is in contact with at least a part of the plurality of battery cells (3) and at least a part of the heat storage cell (4).
